# EUROPEAN PATENT APPLICATION

(11) **EP 4 207 073 A1**
(43) Date of publication of application: **05.07.2023**
(21) Application number: 22217354.4
(22) Date of filing: 30.12.2022
(51) Int. Cl.: G06T 7/73

(54) **METHOD AND SYSTEM FOR TRACKING A CAD MODEL IN REAL TIME BASED ON PARTICLE FILTERS**

(30) Priority: 31.12.2021 KR 20210194399
(71) Applicant: Virnect, Co., Ltd., Seoul 04379 (KR)
(72) Inventor: KIM, Ki Young, 04379 Seoul (KR); KORPITSCH, Thorsten, 2320 Schwechat Wien (AT)
(74) Representative: BCKIP Part mbB

(57) **Abstract**

A method of tracking a CAD model in real time based on a particle filter according to one embodiment of the present disclosure is a method of detecting and tracking a real object based on target object recognition data for a digital model designed on CAD executed by a CAD object tracking detection program installed in a user computing device. The method includes: acquiring an image captured by photographing a surrounding object; detecting a real object corresponding to a shape of a target object designed in CAD from a first frame image of the captured image; and tracking the detected real object in a second frame image of the captured image, wherein the tracking of the detected real object includes determining a new pose of the real object in the second frame image based on the particle filter with respect to an initial pose of the detected real object.

## Description

### CROSS-REFERENCE TO RELATED APPLICATIONS

This Application claims the benefit of Korean Patent Application No. 10-2021-0194399, filed on December 31, 2021 before the Korean Intellectual Property Office.

### TECHNICAL FIELD

The present disclosure relates to a method and system for tracking a CAD model in real time based on particle filters.

The technology of detecting and tracking the position and posture of an object based on an image is actively used in the field of augmented reality or robot control.

In order to estimate the posture of the real model from the viewpoint of an engineer (e.g., viewpoint of a camera shooting the object), already known reference information on the image is required. To this end, in the past, a method of making a database of the appearance of the real model when viewed from various angles and comparing it with the input image, or a method of inputting the initial pose into a system by a user and tracking markers has been used.

However, it is difficult to apply this method to products in production, and a lot of time and effort are required for the user to define the initial posture. In addition, due to the limited condition that a marker needs to be placed at each necessary location for technology implementation, the application to commercialization and industry is limited.

Since a method of detecting/tracking an object based on markerless is more general than the case of using a marker and has a wider application field, research on a method of tracking an object based on markerless has been actively conducted in recent years.

The markerless tracking technology introduced to compensate for the disadvantages of the marker-based object tracking method literally does not use markers, but is characterized by recognizing graphic information such as general magazines and posters or feature information of real objects like markers.

This markerless-based object tracking method requires a high degree of recognition technology, and it is common to use a method of directly photographing a corresponding object replacing a marker, recognizing and learning the object from the captured image, and providing related information.

However, since such a conventional markerless object tracking method is affected by environmental information such as brightness when photographing an object and the shape or location of various objects on the background, when the location of the object to be tracked or the shooting environment changes, the accuracy of object tracking may be deteriorated.

A method of improving the accuracy of matching using deep learning has also been proposed to improve accuracy, but there is still a limitation in that considerable effort and time are required to extract feature information from various and complex real world or objects in the real world.

In addition, in order to utilize augmented reality technology in the medical field or precision industry that requires a very high level of accuracy in tracking and recognizing real objects and matching between real objects and augmented models, or to increase the degree of immersion in augmented reality, It is required to quickly and accurately detect feature information of an object.

In addition, in the fields of augmented reality, precise control of robots, and the like, it is important not only to accurately recognize the object to be tracked, but also to rapidly recognize and track it in response to changes in the position and posture of the camera or the position and posture of the target object.

### SUMMARY

In view of the above, the present disclosure provides a method for solving problems such as delay of learning a real object or cost caused by a decrease in accuracy due to various environmental factors and requirement of high-level vision technology in learning a real object.

In addition, the present disclosure provides a method of recognizing a real object without requiring repeated manufacturing of a real model for learning a new real object or a partially changed object.

Further, the present disclosure provides a method of learning a digital model of a target object on a computer-aided design program to accurately and quickly learn feature information of a real object.

Furthermore, the present disclosure provides a method for enabling fast detection and accurate tracking of a pose of a real object using characteristic information of edges.

Moreover, the present disclosure provides a method of learning a digital model of a target object on a computer-aided design program, which improves the exquisiteness of content augmentation by increasing the accuracy of tracking and recognizing the real object.

In addition, the present disclosure provides a CAD model tracking method capable of efficiently learning feature information of a real object and improving the exquisiteness of content augmentation by increasing the accuracy of tracking and recognizing the real object.

Furthermore, the present disclosure provides a CAD model estimation method for quickly and accurately detecting a real object corresponding to a target object designed in CAD from an image captured in real time.

In accordance with one embodiment of the present disclosure, there is provided a method of tracking a CAD model in real time based on a particle filter, which detects and tracks a real object based on target object recognition data for a digital model designed on CAD executed by a CAD object tracking detection program installed in a user computing device, the method comprising: acquiring an image captured by photographing a surrounding object; detecting a real object corresponding to a shape of a target object designed in CAD from a first frame image of the captured image; and tracking the detected real object in a second frame image of the captured image, wherein the tracking of the detected real object includes determining a new pose of the real object in the second frame image based on the particle filter with respect to an initial pose of the detected real object.

The detecting of a real object corresponding to the shape of the target object designed in CAD from the first frame image of the captured image may includes: acquiring target object recognition data generated based on a digital model designed for the target object in a computer-aided design program; and detecting a real object corresponding to the shape of the digital model from the first frame image through the acquired target object recognition data.

Further, the detecting of a real object corresponding to the shape of the digital model from the first frame image through the acquired target object recognition data may include: detecting the surrounding object in the first frame image; extracting an edge for each surrounding object; and detecting, as the real object, the surrounding object in which a sample point in the target object recognition data matches an edge of the surrounding object.

Further, the determining of a new pose of the real object in the second frame image based on the particle filter with respect to the initial pose of the detected real object may include: determining an initial pose of a real object in the first frame image; estimating a new pose of the real object in the second frame image based on the initial pose of the real object; determining sample particles for the estimated new pose; and determining a new pose of the real object in the second frame image by comparing the determined sample particle with the second frame image.

Further, the estimating of a new pose of the real object in the second frame image based on the initial pose of the real object may include: estimating the new pose through a constant velocity motion model based on the initial pose of the real object.

Further, the estimating of a new pose of the real object in the second frame image based on the initial pose of the real object further may include: determining a particle point for each of the estimated new poses; adding Gaussian noise to the determined particle point; generating a sample point including the particle point to which the Gaussian noise is added; and setting a new pose for the generated sample point.

Further, the estimating of a new pose of the real object in the second frame image based on the initial pose of the real object may include: calculating N number of new poses of the real object by converting the initial pose of the real object into translation parameters (Rx, Tx); and determining sample particles for the N number of new poses.

Further, the estimating of a new pose of the real object in the second frame image based on the initial pose of the real object further may include: calculating a correspondence score by comparing the determined N sample particles with a bounding box of the real object of the second frame image; determining a most ideal sample particle based on the calculated correspondence score; and determining a pose of the determined ideal sample particle as a new pose of the real object in the second frame image.

In this case, the determining of sample particles for the N number of new poses may be performed by a first processor (CPU), and the determining of a new pose of the real object in the second frame image by comparing the determined sample particle with the second frame image may be performed by a second processor (GPU) in parallel.

Further, the method of tracking a CAD model in real time based on a particle filter may further comprise matching and displaying augmented content according to the pose of the tracked real obj ect.

According to the embodiment of the present disclosure, it is possible to efficiently learn feature information of a real object, and improve the exquisiteness of content augmentation by increasing the accuracy of tracking and recognizing the real object.

In addition, according to the embodiment of the present disclosure, it is possible to quickly and accurately detect and track a real object corresponding to a target object designed in CAD from an image captured in real time.

Specifically, according to the embodiment of the present disclosure, it is possible to quickly and accurately track a rapidly detected real object by utilizing a first processor (CPU) and a second processor (GPU) in parallel in a frame image of a video captured in real time.

In addition, according to the embodiment of the present disclosure, by displaying the augmented content in matching with the tracked real object, it is possible to implement a realistic augmented environment.

Further, according to the embodiment of the present disclosure, it is possible to rapidly detect uniformly distributed sample points in all types of manifold computer-aided design models.

In addition, according to the embodiment of the present disclosure, it is possible to provide a method for detecting a sample point that is very efficient in detecting and tracking a real object.

Further, according to the embodiment of the present disclosure, by using sample points as feature information of a real object, digital model learning, and real-time object detection and tracking can be performed very efficiently even in a low-cost device requiring low computational complexity.

In addition, according to the embodiment of the present disclosure, by uniformly distributing and setting the sample points on an object being tracked and detected, the update of the change in the pose of the object can be well controlled, and the phenomenon that the position of the object is detected after jumping to another position can be prevented.

In addition, according to the embodiment of the present disclosure, at the stage of designing a real object before its production, the real object can be learned for augmented reality implementation.

Further, according to the embodiment of the present disclosure, it is possible to generate learning data of a target object having robust characteristics of recognition for various poses of a real object.

Furthermore, according to the embodiment of the present disclosure, the edges of the digital model can be visualized by classifying them according to characteristics, and by rendering the edges in real time according to the view of the digital model, the visual intuition of tracking and detecting the edges of the digital model can be improved.

In addition, the object recognition library data can be shared and used by various user computing devices through a cloud database, which increases the utilization of learning data for target objects.

### BRIEF DESCRIPTION OF THE DRAWINGS

FIG. 1 is an exemplary block diagram of a system for implementing a method of augmenting a virtual model to a real object which implements a target object by learning the target object by detecting edges from a digital model of the target object and setting sample points.
FIGS. 2 and 3 depict that a user computing device detects and tracks a real object in a real environment, and matches augmented content to the tracked real object to display it on a screen, and a user checks the screen through the user computing device.
FIG. 4 is a flowchart of a method of learning a target object by detecting characteristics of edges from a digital model of the target object and setting sample points according to an embodiment of the present disclosure.
FIGS. 5 to 12 schematically depict a user interface of a computer-aided design program running on an authoring computing device.
FIGS. 13 and 14 are flowcharts explaining how a CAD object tracking program tracks a real object corresponding to a target object based on a particle filter.

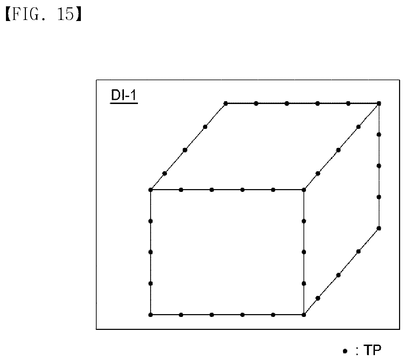

FIG. 15 is a state in which the CAD object tracking program sets initial particles corresponding to a pose of a detected real object.
FIG. 16 illustrates a concept of the CAD object tracking program predicting a new pose to be changed of a real object and setting sample particles for the predicted new pose.
FIG. 17 shows a concept of the CAD object tracking program tracking a pose of a real object in a next frame image through sample particles.

### DETAILED DESCRIPTION

Various modifications may be made to the present disclosure, and the present disclosure may have various embodiments, specific embodiments of the present disclosure will be illustrated in the drawings and described in detail in the detailed description. Effects and features of the present disclosure, and methods for achieving them will become clear with reference to the embodiments described later in detail together with the drawings. However, the present disclosure is not limited to the embodiments disclosed below and may be implemented in various forms. In the following embodiments, terms such as first and second are used for the purpose of distinguishing one component from another component rather than limiting meaning. Further, the singular expression include plural expressions unless the context clearly indicates otherwise. In addition, terms such as comprise, include or have mean that features or component described in the specification exist, and do not preclude the possibility that one or more other features or components may be added. Furthermore, in the drawings, the size of components may be exaggerated or reduced for convenience of description. For example, since the size and thickness of each component shown in the drawings are arbitrarily shown for convenience of explanation, the present disclosure is not necessarily limited to the illustration.

Hereinafter, embodiments of the present disclosure will be described in detail with reference to the accompanying drawings, and when described with reference to the drawings, the same or corresponding components are given the same reference numerals, and redundant descriptions thereof will be omitted.

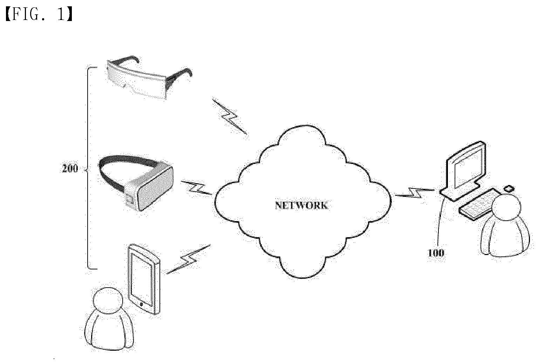

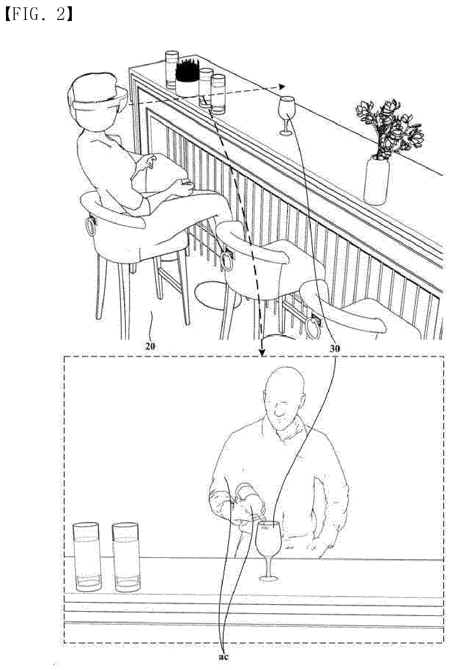

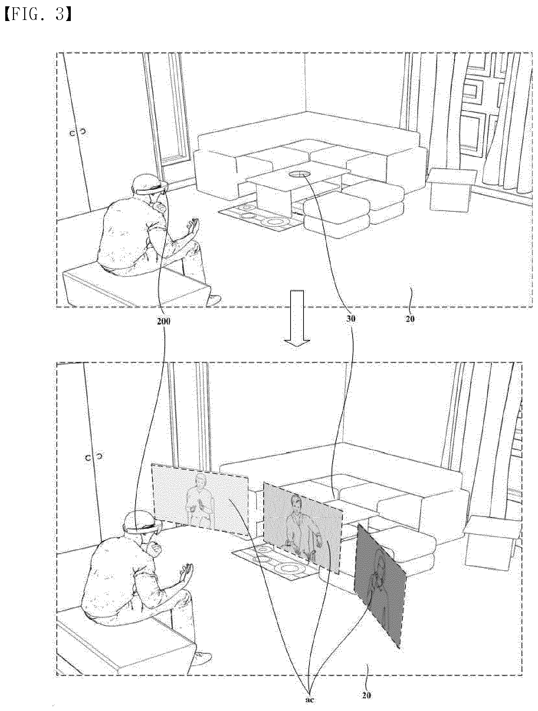

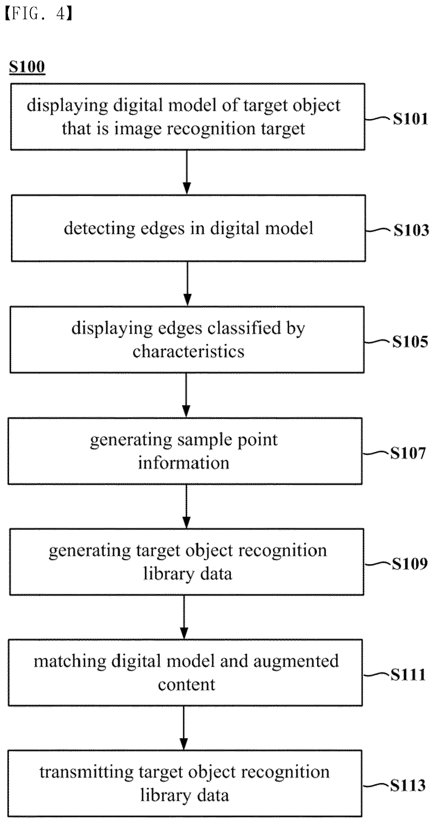

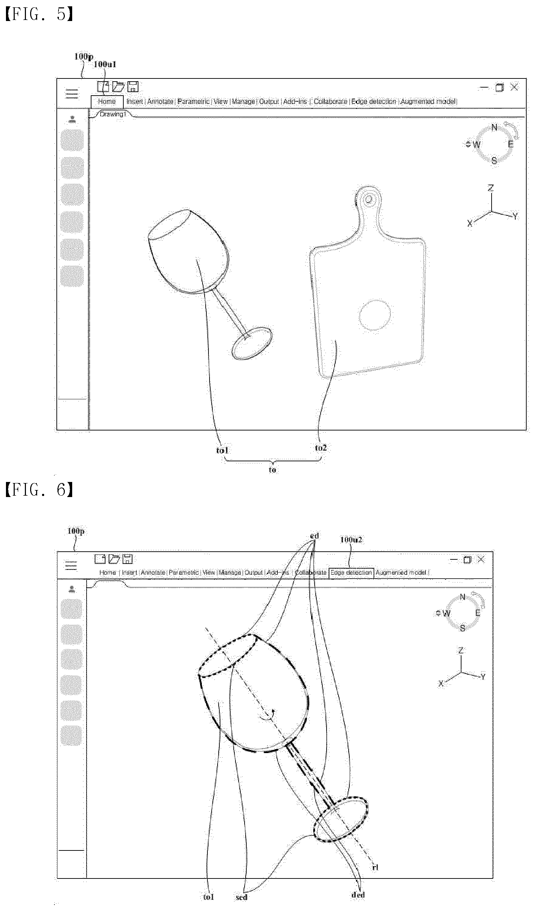

FIG. 1 is an exemplary block diagram of a system for implementing a method of augmenting a virtual model to a real object which implements a target object by learning the target object by detecting edges from a digital model of the target object and setting sample points. Further, FIGS. 2 and 3 depict that a user computing device tracks and recognizes a real object in a real environment, and matches augmented content to the real object to display it on a screen, and a user checks the screen through the user computing device. FIG. 4 is a flowchart of a method of learning a target object by detecting characteristics of edges from a digital model of the target object and setting sample points according to an embodiment of the present disclosure. FIGS. 5 to 12 schematically depict a user interface of a computer-aided design program running on an authoring computing device.

### (System)

Referring to FIGS. 1 to 3, a system 10 according to one embodiment of the present disclosure may include an authoring computing device 100 and a user computing device 200.

The system 10 according to one embodiment of the present disclosure may learn a target object by detecting an edge from a digital model of the target object, and perform various works to a real object 30 by tracking and recognizing the real object 30 in a real environment 20 using learned data.

For example, augmented reality, autonomous driving, 3D map production and utilization through SLAM, and robot control technology can be applied for the tracked real object, and hereinafter, the description will be limited to an example of implementing augmented reality for the tracked real object.

The authoring computing device 100 may provide an environment for learning a target object by detecting an edge from a digital model of the target object and setting a sample point.

In addition, the authoring computing device 100 may provide an environment for creating drawings of 3D models of various objects and an environment for creating and editing contents such as various augmented models or various types of information for various objects.

The authoring computing device 100 may provide various tools for drawing various contents, and may include mechanisms for importing existing files including images and 2D or 3D objects without being limited thereto.

In addition, the authoring computing device 100 may provide an environment for creating drawings of 3D models of various objects and an environment for creating and editing contents such as various augmented models or various types of information for various objects.

The authoring computing device 100 may provide various tools for drawing various contents, but may include mechanisms for importing existing files including images, 2D or 3D objects, without being limited thereto.

Computer systems for augmented reality, referred to as user computing device 200 in one embodiment of the present disclosure, include electronic devices that create augmented reality environments.

Embodiments of an electronic device, user interfaces for the electronic device, and associated processes for using the electronic device are described.

In some embodiments, the user computing device 200 is a portable communication device, such as a mobile phone. Further, other portable electronic devices such as laptop or tablet computers having touch-sensitive surfaces (e.g., touch screen displays and/or touchpads) are optionally used.

In some embodiments, the user computing device 200 may be a computer device that includes or communicates with one or more cameras, rather than a portable communication device.

In addition, the user computing device 200 may include a head mounted display (HMD) that allows a user who wears the device and is immersed in an augmented and/or virtual reality environment to explore a virtual environment and interact with the virtual environment through various different types of inputs.

In some embodiments, as the user computing device 200, a commercial products such as a HoloLens of Microsoft, Meta1/Meta2 Glasses of Meta, Google Glass of Google, MD-10 of Canon, Magic Leap One Creator Edition of Magic Leap may be used, or a device providing the same or similar functions as those of the commercial product may be used.

### (Computer-aided design program)

A computer-aided design program 100p is installed on the authoring computing device 100.

Various software developer kits (SDKs) or toolkits in the form of libraries may be applied to the computer-aided design program 100p.

As exemplarily shown in FIG. 5, the computer-aided design program 100p running on the authoring computing device 100 enables digital production of a 2D drawing and a 3D model of a digital model to corresponding to the real object 30.

In addition, as exemplarily shown in FIGS. 5 and 6, the computer-aided design program 100p enables digital production of 3D model information or virtual information, which is content ac augmented on the real object 30 corresponding to the digital model to produced through the computer-aided design program 100p.

That is, the object to be tracked regardless of existence can be produced as a digital model to in the computer-aided design program 100p, and the manufactured digital model to can be recognized to be traceable, and the user computing device 30 that has received the data recognizing digital model to may sense an image of a real object 30 having a shape corresponding to the digital model to, and track the real object 30 in the sensed image.

In addition, the computer-aided design program 100p may produce the augmented content ac corresponding to the real object 30 by matching the augmented content ac to the digital model to, and the user computing device 30 receiving the produced content may provide an augmented reality environment by augmenting the content ac corresponding to the real object 30 tracked on the captured image.

That is, the computer-aided design program 100p may implement physical and visual combination between the digital model to of the target object corresponding to the real object 30 and the augmented content ac, and match positions of the digital model to and the augmented content ac.

Further, the computer-aided design program 100p may provide a target object modeling interface 100u1 for modeling the target object. A 2D drawing or 3D model of the digital model to of the target object may be created on the target object modeling interface 100u1.

As exemplarily shown in FIG. 6, the computer-aided design program 100p may provide an edge detection interface 100u2. In various embodiments, the edge detection interface 100u2 may be integrated into a single interface with the target object modeling interface 100u1.

In various embodiments, the edge detection interface 100u2 may be executed according to the selection of a specific affordance on the target object modeling interface 100u1 and displayed overlapping with the target object modeling interface 100u1. In addition, the edge detection interface 100u2 may provide tools for detecting an edge of a target object, setting a sample point, correcting the detected edge, and editing the edge.

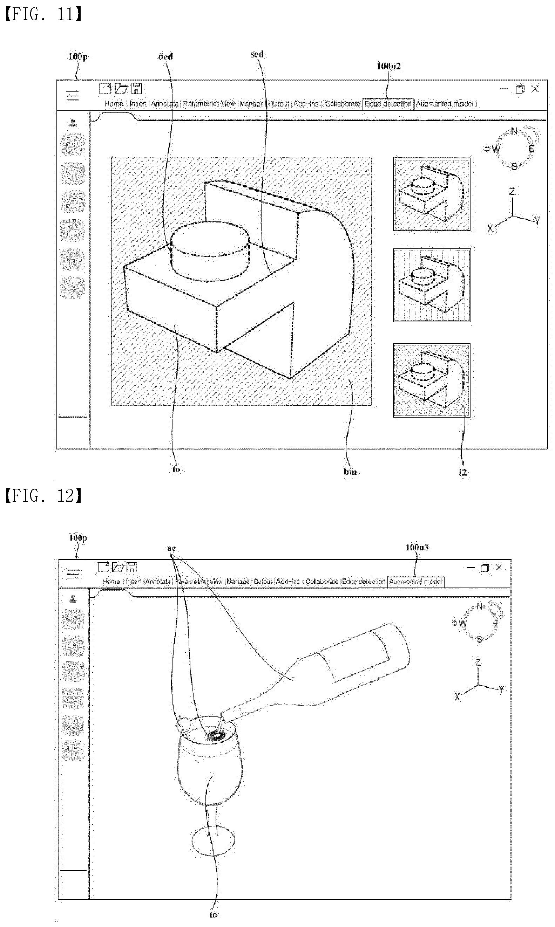

As exemplarily shown in FIG. 12, the computer-aided design program 100p may provide an augmented model implementation interface 100u3 to provide various tools for drawing the augmented model. In various embodiments, the augmented model implementation interface 100u3 may be an interface integrated into a single interface with the target object modeling interface 100u 1.

### (Method of learning a target object)

Referring to FIG. 4, a method S100 of learning a target object by detecting edge characteristics from a digital model of a target object according to one embodiment of the present disclosure and setting a sample point, may include displaying the digital model of the target object that is an image recognition target (S101), detecting edges in the digital model (S103), displaying the edges classified by characteristics (S105), generating sample point information (S107), generating target object recognition library data (S109), matching digital model and augmented content (S111), and transmitting target object recognition library data (S113).

Hereinafter, each step will be described in detail with reference to the drawings.

### (Displaying of a digital model of a target object that is an image recognition target (S101))

As shown in FIG. 5, the computer-aided design program 100p may display a digital model to of the target object.

The displayed digital model of the target object may be created through the target object modeling interface 100u1 as a 3D model, for example.

In some embodiments, the computer-aided design program 100p may load and display a pre-stored digital model to of the target object.

According to some embodiments, the digital model to of the target object may be created on a different type of computer-aided design program.

In addition, the computer-aided design program 100p may import and display a digital model to or a 2D image of the target object created the different type of computer-aided design program.

### (Detecting of edges in the digital model (S 103), and displaying of the edges classified by characteristics (S105))

The computer-aided design program 100p may detect edge information on the digital model to based on attribute information of the digital model to.

The attribute information of the digital model to may include coordinate information of each element constituting the digital model to. The element may mean including at least one of a point, a line, and a face constituting the digital model to.

In various embodiments, the attribute information of the digital model to may include color information of each element constituting the digital model to.

Various edge detection algorithms may be applied to detect edge information of the digital model to. For example, the computer-aided design program 100p may detect an edge based on angle information between normal vectors of faces including an arbitrary point constituting the outline of the digital model to, but the present disclosure is not limited thereto.

The computer-aided design program 100p may classify the detected edges according to characteristics.

In one embodiment, the detected edges may be classified into a sharp edge, a dull edge, and a flat edge.

Among the edges detected in the digital model to, when a face forming the edge and a normal vector of the face have a first angle range (a1 to a2), the corresponding edge may be classified as the sharp edge, and when a face forming the edge and a normal vector of the face have a second angle range (b1 to b2, b2 < a1) in which an angle smaller than the minimum angle a1 in the first angle range (a1 to a2) is the maximum angle, the corresponding edge may be classified as the dull edge.

In some embodiments, it is determined that an edge having a third angle range (c1 to c2, c2 < b 1) in which an angle smaller than the minimum angle b 1 in the second angle range (b 1 to b2) is the maximum angle, does not generate a visible feature, and the corresponding edge may be determined to be a non-edge. An angle formed by a face having the third angle range and a normal vector of each face may have an angle substantially close to 0.

In addition, since no edge exists on a flat face of the digital model to, no edge will be detected on the corresponding flat face. However, assuming that a line is drawn on the flat face, the computer-aided design program 100p may detect the line on the flat face as an edge and classify it as the flat edge.

That is, when the angle between the normal vector of the face including at least some points of a line and components of the digital model to adjacent thereto and the normal vector of the face constituting components of the digital model to around the line is 0 degree, the corresponding line may be classified as the flat edge.

In various embodiments, based on calculated value of an inner product between the normal lines of a visualized surface in the digital model to at a specific location and an inner product between the normal lines of another surface that is not displayed on a screen depending on the view on the computer-aided design program 100p but is connected to the visualized surface, the computer-aided design program 100p may detect dull edges by quickly and efficiently determining whether the corresponding surfaces form dull edges that are not sharp or flat.

Referring to FIG. 6, the computer-aided design program 100p may classify edges ed detected on a first digital model to1 according to characteristics and display edges sed and ded to be visually distinguished. In some embodiments, the computer-aided design program 100p may display the edges ed overlapping the first digital model to1.

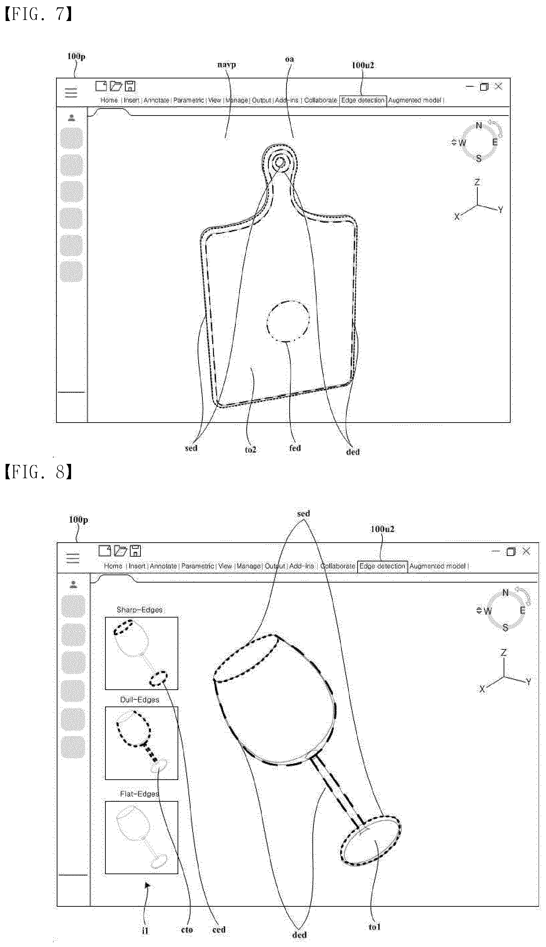

It can be seen that on the first digital model to1 as a wine cup exemplarily illustrated in FIG. 6, sharp edges sed and dull edges ded are displayed, and no flat edge exists. In addition, on a second digital model to2 as a cutting board exemplarily illustrated in FIG. 7, sharp edges sed and dull edges ded are displayed, and a flat edge fed is displayed.

According to various embodiments, assuming that the first digital model to1 as the wine cup exemplarily illustrated in FIG. 6 is rotated about a reference line rl (shown for convenience of description), the dull edge ded becomes the entire area of the cup portion and the handle portion of the wine cup. Accordingly, since the dull edge ded is dependent on the view on the computer-aided design program 100p, the dull edge ded may be updated in real time during the position change of the digital model to and displayed in the edge area on the first digital model to1.

Referring to FIG. 8, in various embodiments, the computer-aided design program 100p may physically decompose and visualize the edges by characteristics on the first digital model to1 through an individual edge setting interface i1.

Through the individual edge setting interface i 1, the computer aided design program 100p may extract only sharp edges to display the sharp edges overlapping with the first digital model to1, extract only dull edges to display the dull edges overlapping with the first digital model to1, and extract only flat edges to display the flat edges overlapping with the first digital model to1.

In various embodiments, duplicate digital models cto and duplicate edges ced displayed on the individual edge setting interface i1 may be synchronized with the positions of the first digital model to1 and the edges ed displayed on the edge detection interface 100u2. Accordingly, the positions of the duplicated digital model cto and the duplicated edges ced may be changed in synchronization with the change in the position of the first digital model to1 and the edges ed, respectively.

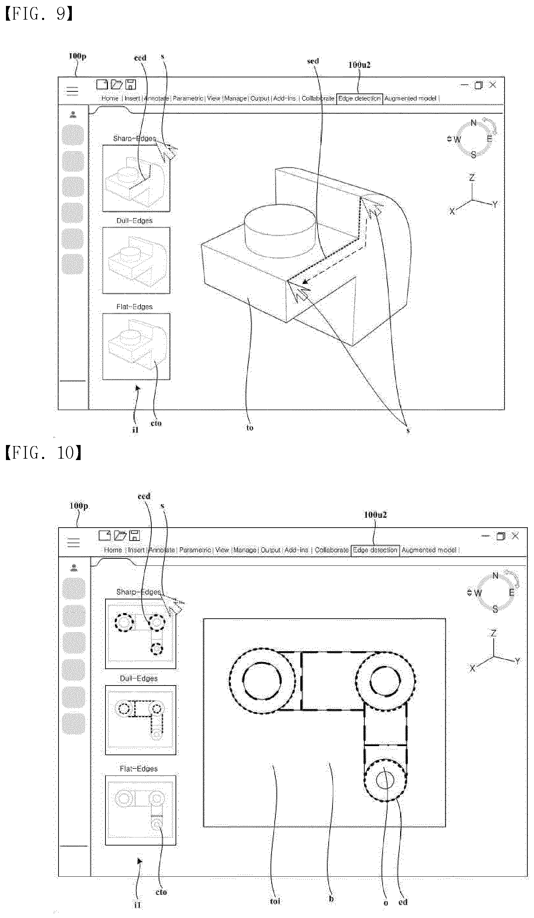

Referring to FIG. 9, in various embodiments, the computer-aided design program 100p may provide an environment in which an edge can be set in at least a partial area on the digital model to or a displayed edge can be edited. For example, the computer-aided design program 100p may display an edge ed connecting selected points to each other in response to selection of a plurality of points on the digital model to. In addition, the computer-aided design program 100p may display an edge connecting a plurality of points selected on the digital model to in response to selection of any one of the sharp edge, the dull edge, and the flat edge on the individual edge setting interface i1 (according to the illustrated example, the selected sharp edge is displayed on the digital model).

In various embodiments, it is assumed that a design of a partial area is changed according to a design change of the digital model to. For example, assuming that a line existing on a flat face of the digital model to is removed, the computer-aided design program 100p may remove the specific line and the flat edge displayed on the corresponding line of the digital model to together in response to receiving a line removal request signal.

In addition, when the computer-aided design program 100p imports and displays a digital model to composed of a different type of extension, since the design of a partial area of the digital model to may be modified due to compatibility problems between programs, and the like, a partial modification of the digital model to by the user is required. In this case, when the user changes the design of a partial area of the digital model to, the edge ed is automatically detected and displayed in the modified part of the digital model to, and the edge ed on the digital model to may be updated in real time, and in some cases, the user may directly add an edge ed or edit the edge ed.

In addition, when a 2D image is treated as a digital model toi as exemplarily shown in FIG. 10, it is necessary to take into account the imprecision of the displayed edge ed on the digital model toi caused by factors such as the unclear distinction according to the matching of the contrast and gray level values between a background b and an object o in the 2D image, and 2D coordinate information including no meaning of z-axis information. In this case, the user directly adds or edits the edge ed so that robust feature information of the object o on the 2D image can be detected. Accordingly, precise tracking and a highly accurate recognition rate of the object o in the digital model toi of the 2D image can be guaranteed even when the object o on the 2D image is located on real environments with various backgrounds.

### (Generating of sample point information (S107))

The computer-aided design program 100p may generate sample point information by detecting a sample point from the detected edge of the digital model to.

Further, the sample point detected in this way may be set as a feature point for detecting and tracking the digital model to and included in the sample point information.

Various algorithms for detecting sample points from edges may be applied.

In some embodiments, the computer-aided design program 100p may detect a midpoint of each edge, detect a sample point in one direction along the corresponding edge from the detected midpoint, and detect a sample point in the other direction along the corresponding edge.

Specifically, the computer-aided design program 100p may extract sample points at regular intervals from the midpoint to both ends of the edge, and set the extracted sample points as feature points for the corresponding edge.

This is more advantageous in ensuring uniformity of distribution of sample points at each edge compared to detecting the sample point from the vertex of the edge.

In addition, in one embodiments, it is possible to solve the runtime-intensive problem during data learning compared to a method of rendering a digital model and determining and retrieving a silhouette through erosion or a method of retrieving a sample point on a rendered image by checking a strong gradient. Further, sample points can be detected more easily especially in a digital model having a unique internal structure.

In some embodiments, the computer-aided design program 100p may display sample points detected for each edge. In some embodiments, the computer-aided design program 100p may display sample points generated by overlapping with the digital model to. In some embodiments, a graphics processing unit (GPU) of the authoring computing device 100 may be used to perform visibility of sample points for each position of the digital model to and discarding of all obscured sample points in real time.

### (Generating of target object recognition library data (S109))

The computer-aided design program 100p may generate target object recognition library data based on detected edge information and sample point information on the detected edge.

In some embodiments, the object recognition library data may include at least one of position information of a digital model to of a target object, positions of edges on the digital model to of the target object, a relative position among the edges, characteristics of the edges, positions of sample points of the edges, and relative positional relationship information.

In various embodiments, the computer-aided design program 100p may obtain edge information detected from the digital model to through a pre-learned deep learning neural network and information of a sample point on the detected edge to detect robust feature information of the digital model to of the target object.

In various embodiments, the computer-aided design program 100p may group sample points of edges of the same characteristic and learn each of the grouped data through a deep learning network to obtain robust feature information of the digital model to of the target object.

In various embodiments, the computer-aided design program 100p may provide an environment for testing the robustness of detected sample points.

In addition, the computer-aided design program 100p may store the content ac designed to match the target object and the matching relationship between the target object and the content ac (e.g., posture and position matching relationship) with the target object recognition library data.

Referring to FIG. 11, the computer-aided design program 100p may display a digital model to of a target object and a background model bm serving as a background of the digital model to of the target object.

The computer-aided design program 100p may generate image data taken in the current view for the background model bm and the digital model to visually displayed.

In addition, the computer-aided design program 100p may move and/or rotate the digital model to to change the pose of the digital model to while maintaining the background model bm.

Further, the computer-aided design program 100p may generate image data captured in the current view (view currently displayed on the screen) for the displayed background model bm and the digital model to whose pose has been changed.

In some embodiments, the computer-aided design program 100p may change the background model bm while maintaining the current pose of the digital model to. In addition, the computer-aided design program 100p may generate image data captured in the current view for the displayed background model bm and digital model to. Accordingly, it is possible to generate captured image data for the digital model to located on various backgrounds.

In some embodiments, the computer-aided design program 100p may provide an interface i2 for visualizing image data generated by photographing the background model bm and the digital model to depending on the change of the background model bm or the pose of the digital model to.

The computer-aided design program 100p may evaluate the accuracy of tracking and recognizing an object corresponding to the digital model to in each of the captured image data based on the generated object recognition library data.

In addition, the computer-aided design program 100p may re-search sample points on the digital model to when it is determined that the accuracy of recognition is equal to or less than a preset reference value.

In this case, for example, the computer-aided design program 100p may detect sample points on the edge by applying another algorithm that has not been applied among a plurality of sample point detection algorithms, or re-detect the sample points by changing parameter conditions in the same sample point detection algorithm, but the present disclosure is not limited thereto.

The computer-aided design program 100p may generate target object recognition library data having robust characteristics in tracking and recognizing real objects located on various real backgrounds while repeating the above processes.

In various embodiments, the computer-aided design program 100p may generate target object recognition library data in which robustness of tracking and recognition of a real object embodying the digital model to is secured by detecting sample points, or edges and sample points from the digital model to with no background (e.g., FIG. 5 or 6), detecting sample points, or edges and sample points from digital models to located on various digital background models bm, and learning the sample points of the digital model to through the deep learning network.

### (Matching of digital model and augmented content (S111))

Referring to FIG. 12, the computer-aided design program 100p may provide various tools for creating augmented content ac to be matched with a digital model to of a target object.

In various embodiments, the computer-aided design program 100p may call and display pre-stored augmented content ac. According to some embodiments, the augmented content ac may be created on a different type of computer-aided design program. Then, the computer-aided design program 100p may import and display the augmented content ac created on the different type of computer-aided design program.

The computer-aided design program 100p provides an interface for moving, rotating, enlarging, and reducing the displayed augmented content ac in x, y, and z axes to enable sufficient and detailed matching of the augmented content ac and the digital model to of the target object.

It should be noted that the concept of the matching includes not only the physical contact between the augmented content ac and the digital model to of the target object, but also the setting of a distance of the augmented content ac from the digital model to of the target object, and the setting of a display position of the augmented content ac with respect to the digital model to of the target object.

In addition, the computer-aided design program 100p may provide a tool for imparting dynamic properties to the augmented content ac to perform simulation while changing the location and/or shape of the augmented content ac in time series. Further, the computer-aided design program 100p may provide an interface for adding various types of information as well as an augmented model.

Further, the computer-aided design program 100p may include and store the augmented content ac designed through such an interface and matching relationship information between the augmented content ac and the target object in the target object recognition library data.

### (Transmitting of target object recognition library data (S113))

The authoring computing device 100 may transmit target object recognition library data to an external device in response to a transmission request of the external device. The external device may be the user computing device 200, but is not limited thereto.

The user computing device 200 may receive target object recognition library data from, for example, the authoring computing device 100 that stores the target object recognition library data.

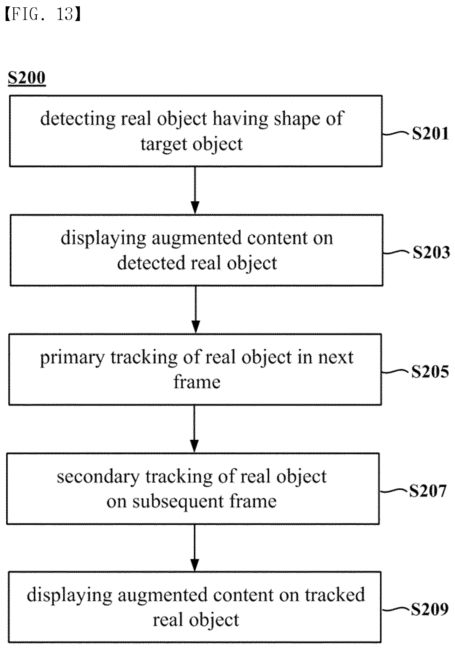

Hereinafter, a process of detecting and tracking a real object corresponding to a target object in the user computing device 200 receiving the target object recognition library data will be described in detail with reference to FIG. 13.

### (Detecting of a real object having a shape corresponding to the target object (S201))

Referring back to FIGS. 2 and 3, the user computing device 200 receiving the target object recognition library data may image-sense objects in the real environment 20 to detect a real object 30 corresponding to a digital model to of a target object in the sensed image.

A CAD object tracking program installed in the user computing device 200 and executed in the processor may detect a real object 30 having a shape corresponding to the shape of a target object in the captured image based on the information about the detected edges ed on the digital model to of the target object and the sample point of each edge ed.

The CAD object tracking program may extract feature information of the edges from the captured image by applying edge detection and sample point extraction algorithms, compare them with the target object recognition library data, and detect a real object 30 having corresponding edges as feature information to recognize the target object.

In various embodiments, the CAD object tracking program may detect the pose of the real object 30 based on all the dull edges among the edges ed detected in the captured image.

Since the CAD object tracking program identifies the dull edge by checking the difference in sign by the inner product of the normal vectors of various faces constituting the real object 30, the pose of the real object 30 can be more efficiently detected.

Here, the detecting of the pose of the real object 30 can be understood that the relationship between the position and posture of the camera of the user computing device 30 for image sensing the real object 30 and the position and posture of the real object 30 is arranged on a 3D spatial coordinate system. In one embodiment, it can be understood that six degrees of freedom (hereinafter, a pose of the real object) of the camera for the real object 30 are detected.

According to the embodiment, the CAD object tracking program can more rapidly detect and track the real object 30 based on sample points of edges on target object recognition library data.

That is, since the sample points are data of sampled edges, the amount of data is small compared to the data of the entire edges, so a real object corresponding to the target object can be detected more quickly with a small amount of calculation based on the sample points of a small amount of data.

### (Matching and displaying of augmented content ac corresponding to the detected real object (S203))

When detecting the real object 30, the CAD object tracking program may call the augmented content ac stored in the database or the authoring computing device 100, or other server, and render and augment the augmented content ac in matching with the real object 30 to adjust event flags to trigger stored interaction events.

In this case, the augmented virtual model or other virtual information may be observed in various aspects and different sizes by matching the augmented content ac to the real object 30 based on the matching relationship between the augmented content ac and the target object according to the pose (e.g., 6 degrees of freedom) of the real object 30 depending on the viewing angle and observation distance of the camera of the user computing device 200 for the real object 30. Accordingly, the user computing device 200 may display various information related to the real object 30 through the augmented content ac.

In various embodiments, the user may manipulate augmented content ac displayed on the user computing device 200 through manipulation of the user computing device 200.

In various embodiments, the CAD object tracking program may provide an interface that allows the user to move, rotate, enlarge, and reduce the displayed augmented content ac in the x, y, and z axes to enable sufficient and detailed observation of the augmented content ac.

### (Primary tracking of the detected real object (S205))

When the position and posture of the camera of the user computing device 200 are changed after detecting the real object 30 corresponding to the target object, or the position and posture of the real object 30 are changed, since the pose of the real object 30 in the camera (6 degrees of freedom of the real object viewed from the camera) is changed, only when the pose of the real object 30 is tracked, the augmented content ac and the real object 30 can be smoothly matched.

Accordingly, the pose of the real object 30 needs to be continuously calculated for each frame image continuously captured by the camera of the user computing device 200.

In one embodiment, in order to smoothly track the real object 30 corresponding to the digital model to, the CAD obj ect tracking program can track by applying an obj ect tracking method based on a particle filter to a digital model to produced through an authoring program and a real object corresponding thereto.

General methods of tracking objects based on particle filters are described in detail in "Particle Filtering Object Tracking Methodology using Feedback and Box Calibration, Volume 8, No. 1 of the Journal of the Communications Satellite Space Industry Research Association", which replaces the description of the general methods of tracking objects based on particle filters.

Hereinafter, an object tracking method based on a particle filter capable of reducing the time required to track a real object 30 and improving accuracy within a limited data processing resource of the user computing device 200 will be described with reference to FIG. 13.

First, the CAD object tracking program may determine particle points that form particles in the real object 30 according to an initial pose of the real object 30 when detecting the real object 30.

Here, the particle points are points located on the edge extracted from the image in which the real object 30 is detected, and may refer to points arranged at regular intervals along the edges. In this case, since the silhouette edge corresponding to the appearance of the real object 30 among the extracted edges is sensitive to pose change, the CAD object tracking program may extract particle points only from the silhouette edge.

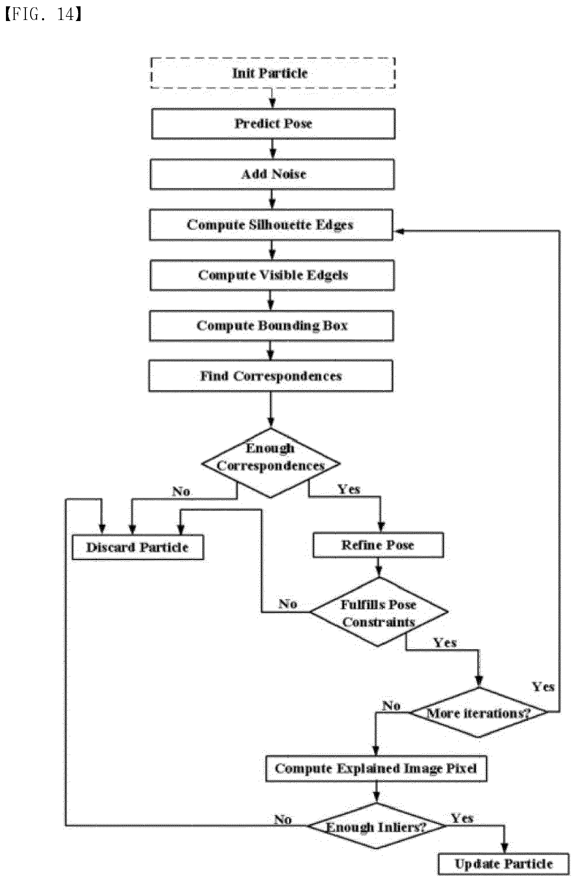

For example, referring to FIG. 14, it shows the extraction of particle points TP from the silhouette edge corresponding to the appearance of the real object 30 in the first frame image DI-1 that detected the initial object.

In addition, the CAD object tracking program may predict a new pose of the real object 30 in the next frame image based on the initial pose of the real object 30. For example, the CAD object tracking program may predict and calculate a new pose of the real object 30 based on a constant velocity motion model.

Next, the CAD object tracking program may extract a sample particle corresponding to the predicted new pose and add Gaussian noise to the sample particle.

In other words, the CAD object tracking program may calculate a rotational transformation matrix Rx and a parallel movement vector Tx by applying the constant velocity motion model to the initial pose, calculate the x-th new pose of the real object 30 in which Rx and Tx are converted, and determine the sample particle for the calculated new pose.

In one embodiment, the CAD object tracking program may calculate N number of new poses converted into (R1, T1) to (Rn, Tn) for the initial pose, and determine the particle point at the silhouette edge of the real object 30 corresponding to each new pose to determine N number of sample particles. The CAD object tracking program may control such that the new pose estimation and particle point determination process is performed by a first processor CPU and the sample particle determined for each new pose to be performed next and a correspondence to the real object 30 in the next frame image is performed in parallel in a second processor GPU. Accordingly, unnecessary memory transfer operations between the first processor CPU and the second processor GPU may be avoided, and calculation speed may be greatly improved without loss of precision.

In other words, in one embodiment, the CAD object tracking program may estimate new poses with various Rx and Tx changes by predicting new poses to be changed from the initial pose of the real object 30 detected in the initial frame image and determine a particle point for a real object (or digital model to) with the estimated new poses to generate sample particles.

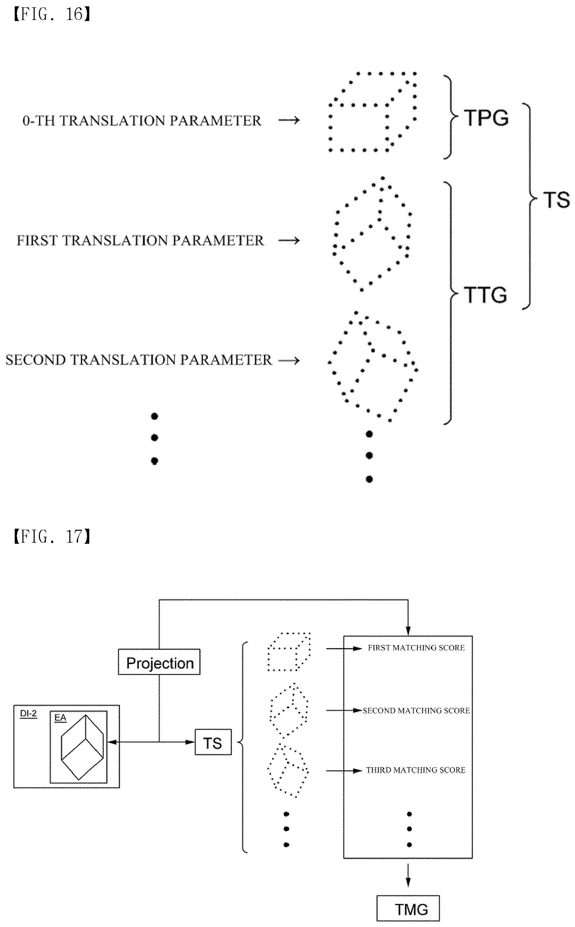

For example, referring to FIG. 16, the initial particle point TPG may be changed according to various translation parameters (Rx, Tx) to generate a sample particle TTG for a new pose changed from the initial pose.

Next, the CAD object tracking program may determine sample particles with a preset threshold by comparing the real object 30 with the sample particles in the next frame image (e.g., the image to newly track the real object) after the real object is detected.

Specifically, the CAD object tracking program may determine a bounding box including the real object 30 in the next frame image.

In addition, the CAD object tracking program may calculate a correspondence by corresponding each sample particle to an image in the bounding box.

Specifically, referring to FIG. 17, in one embodiment, the CAD object tracking program may detect a boundary line, that is, edges, existing in the next frame image DI-2.

As an example, the CAD object tracking program may detect the edge of the real object 30 in the next frame image bounding box DI-2 by performing a predetermined image processing process based on the next frame image bounding box DI-2.

Next, in one embodiment, the CAD object tracking program may calculate a correspondence (matching score) between an edge (e.g., silhouette edge) in the detected next frame image bounding box DI-2 and a particle point constituting the sample particle.

Specifically, as an example, the CAD object tracking program may project a plurality of particle points included in a predetermined sample particle onto the edge of the real object 30 in the next frame image bounding box DI-2 (hereinafter, referred to as a target edge area EA).

Here, the target edge area EA according to one embodiment may be a predetermined bounding box area including the target edge.

In addition, in this case, the plurality of particle points are in a state in which mutual positional relationships based on coordinate information for each particle point are all set, and may be projected onto the target edge area EA while maintaining the set mutual positional relationship.

In one embodiment, the CAD object tracking program may calculate a correspondence through the similarity of the plurality of particle points projected on the target edge area EA.

For example, the CAD object tracking program may calculate a correspondence for the sample particle based on the number of matching points located on the target edge or/and the distance between the remaining particle points and the edge.

Subsequently, in one embodiment, the CAD object tracking program may calculate a correspondence for each of the N sample particles in the same manner as above.

In addition, in one embodiment, the CAD object tracking program may detect a first sample particle with the correspondence of a preset first threshold or above among the calculated correspondences of the sample particles.

Next, the CAD object tracking program may generate M number of new poses again with respect to the first pose of the first sample particle and determine a secondary sample particle for the M new poses. In this case, the M secondary sample particles may be determined in the same manner as determining the sample particles for the initial particles, and in order to prevent overlapping operations, it is desirable that the translation parameter for generating the secondary sample particle has a smaller absolute value compared to the primary sample particle generation.

The CAD object tracking program may repeat the process of calculating the correspondence by comparing the M secondary sample particles with the real object 30 in the bounding box of the next frame image and detect a second sample particle with the correspondence of a predetermined second threshold greater than the first threshold.

The CAD object tracking program may detect the second sample particle having the correspondence of the second threshold or above as a third sample particle.

In addition, the CAD object tracking program may determine secondary sample particles from sample particles with the correspondence of the first threshold or above in the remaining primary sample particles, calculate the correspondence of the determined secondary sample particles, and detect tertiary sample particles with the correspondence of the second threshold or above.

Such a tracking process can improve tracking speed more quickly and at the same time improve tracking success rates by enabling comparisons with more sample particles and next frame images.

In one embodiment, reliability may be calculated by comparing the tertiary sample particle with pixels of the next frame image, and a third sample particle representing the best reliability may be determined. Here, the reliability may include a score for an ideal matching point (number of inliers, calculated based on a solved linear equation system).

For example, by comparing the sample particles generated repeatedly as above with the next frame image, the sample particles with the highest correspondence to the real object 30 may be determined as the third sample particles with the best reliability.

Next, the CAD object tracking program may determine the pose of the real object 30 in the next frame image through a third pose of the third sample particle of the real object 30 finally determined.

Meanwhile, in the CAD object tracking program, since the correspondence calculation is performed in parallel with the sample point determination, when detecting a sample point with a correspondence exceeding a preset third threshold, it is considered that the corresponding sample point is matched with the pose of the real object 30 in the next frame image, and thus the operation necessary for tracking may be terminated in advance.

In this way, the CAD obj ect tracking program can quickly and accurately obtain real object tracking results by detecting sample particles with the highest matching rate with the edge in the next frame image DI-2 among a plurality of sample particles according to various translation parameters.

### (Secondary tracking of the detected real object (S207))

The CAD object tracking program that has tracked the pose of the real object 30 in the next frame image may track the pose of the real object 30 in the subsequent frame image of the next frame image.

In this case, the CAD object tracking program may select a sample particle for the predicted pose of the real object 30 from among the sample particles determined in the previous step.

For example, the CAD object tracking program may track the pose of the real object 30 in the subsequent frame image from M number of sample particles determined in the order of the correspondence.

As another example, the CAD obj ect tracking program may generate M number of sample particles by applying a preset translation parameter for the finally determined third sample particle.

As further another example, the CAD object tracking program may track the pose of the real object 30 in the subsequent frame image through M number of secondary sample particles for the third sample particle.

### (Displaying of augmented content for tracked real object poses (S209))

The CAD object tracking program may match and display the augmented content ac according to the pose of the real object 30 tracked in this way. Through this, the CAD object tracking program may simulate an augmented model that changes sequentially over time as a 4D concept in which a time dimension is added to the three dimensions of the x, y, and z axes.

In various embodiments, the user computing device 200 may provide interaction functions, and in some embodiments, an additional controller may be used to implement the interaction.

The embodiments according to the present disclosure described above may be implemented in the form of program instructions that can be executed through various computer components and recorded on a computer-readable recording medium. The computer-readable recording medium may include program instructions, data files, data structures, etc. alone or in combination. The program instructions recorded on the computer-readable recording medium may be specially designed and configured for the present disclosure, or may be known and available to those skilled in the art of computer software. Examples of the computer-readable recording medium include a magnetic medium such as a hard disk, a floppy disk and a magnetic tape, an optical recording medium such as CD-ROM and DVD, a magneto-optical medium such as a floptical disk, and hardware devices specially configured to store and execute program instructions, such as ROM, RAM, flash memory, and the like. Examples of the program instructions include high-level language codes that can be executed by a computer using an interpreter or the like as well as machine language codes generated by a compiler. the hardware device may be modified to one or more software modules to perform processing according to the present disclosure, and vice versa.

Specific implementations described in the present disclosure are examples, and do not limit the scope of the present disclosure in any way. For brevity of the specification, description of conventional electronic components, control systems, software, and other functional aspects of the systems may be omitted. In addition, the connection of lines or connecting members between the components shown in the drawings represent functional connections and/or physical or circuit connections by way of example, and in actual devices, various functional connections, physical connections, or circuit connections, which are replaceable or additional. Further, if there is no specific reference such as "essential" or "important", it may not be a component necessarily required for the application of the present disclosure.

In addition, the detailed description of the present disclosure described has been described with reference to preferred embodiments of the present disclosure, it will be understood by those skilled in the art or those having ordinary knowledge in the art that the present disclosure may be variously modified and changed without departing from the spirit and the technical scope of the present disclosure described in the claims to be described later. Therefore, the technical scope of the present disclosure is not limited to the contents described in the detailed description of the specification, but should be defined by the claims.

## Claims

1. A method of tracking a CAD model in real time based on a particle filter, which detects and tracks a real object based on target object recognition data for a digital model designed on CAD executed by a CAD object tracking detection program installed in a user computing device, the method comprising:
acquiring an image captured by photographing a surrounding object;
detecting a real object corresponding to a shape of a target object designed in CAD from a first frame image of the captured image; and
tracking the detected real object in a second frame image of the captured image,
wherein the tracking of the detected real object includes determining a new pose of the real object in the second frame image based on the particle filter with respect to an initial pose of the detected real object.

2. The method of claim 1, wherein the detecting of a real object corresponding to the shape of the target object designed in CAD from the first frame image of the captured image includes:
acquiring target object recognition data generated based on a digital model designed for the target object in a computer-aided design program; and
detecting a real object corresponding to the shape of the digital model from the first frame image through the acquired target object recognition data.

3. The method of claim 2, wherein the detecting of a real object corresponding to the shape of the digital model from the first frame image through the acquired target object recognition data includes:
detecting the surrounding object in the first frame image;
extracting an edge for each surrounding object; and
detecting, as the real object, the surrounding object in which a sample point in the target object recognition data matches an edge of the surrounding object.

4. The method of claim 1, wherein the determining of a new pose of the real object in the second frame image based on the particle filter with respect to the initial pose of the detected real object includes:
determining an initial pose of a real object in the first frame image;
estimating a new pose of the real object in the second frame image based on the initial pose of the real object;
determining sample particles for the estimated new pose; and
determining a new pose of the real object in the second frame image by comparing the determined sample particle with the second frame image.

5. The method of claim 4, wherein the estimating of a new pose of the real object in the second frame image based on the initial pose of the real object includes:
estimating the new pose through a constant velocity motion model based on the initial pose of the real object.

6. The method of claim 5, wherein the estimating of a new pose of the real object in the second frame image based on the initial pose of the real object further includes:
determining a particle point for each of the estimated new poses;
adding Gaussian noise to the determined particle point;
generating a sample point including the particle point to which the Gaussian noise is added; and
setting a new pose for the generated sample point.

7. The method of claim 4, wherein the estimating of a new pose of the real object in the second frame image based on the initial pose of the real object includes:
calculating N number of new poses of the real object by converting the initial pose of the real object into translation parameters (Rx, Tx); and
determining sample particles for the N number of new poses.

8. The method of claim 7, wherein the estimating of a new pose of the real object in the second frame image based on the initial pose of the real object further includes:
calculating a correspondence score by comparing the determined N sample particles with a bounding box of the real object of the second frame image;
determining a most ideal sample particle based on the calculated correspondence score; and
determining a pose of the determined ideal sample particle as a new pose of the real object in the second frame image.

9. The method of claim 8, wherein the determining of sample particles for the N number of new poses is performed by a first processor (CPU), and the determining of a new pose of the real object in the second frame image by comparing the determined sample particle with the second frame image is performed by a second processor (GPU) in parallel.

10. The method of claim 1, further comprising:
matching and displaying augmented content according to the pose of the tracked real obj ect.
